# FASCICULE DE BREVET EUROPEEN

(11) **EP 3 006 417 B1**
(45) Date de publication et mention de la délivrance du brevet: **28.06.2023**
(21) Numéro de dépôt: 15189069.6
(22) Date de dépôt: 09.10.2015
(51) Int. Cl.: C04B 28/24, C04B 28/26

(54) **NOUVELLES MOUSSES RIGIDES MINÉRALES POREUSES, LEURS PROCEDES DE PREPARATION ET LEURS UTILISATIONS**
NEUE RIGIDE PORÖSE MINERALISCHE SCHAUMSTOFFEN, IHRE HERSTELLUNGSVERFAHREN UND IHRE VERWENDUNGEN
NEW POROUS RIGID MINERAL FOAMS, THEIR MANUFACTURING PROCESSES AND THEIR USES

(30) Priorité: 09.10.2014 FR 1459670
(43) Date de publication de la demande: 13.04.2016
(73) Titulaire: GLAZTEC'H, 91390 Morsang sur Orge (FR)
(72) Inventeur: LE CORFEC, Yves, 91390 Morsang sur Orge (FR)
(74) Mandataire: IPAZ

(56) Documents cités:
- EP-A1- 0 341 150
- EP-A1- 0 472 273
- EP-A2- 1 164 179
- JP-A- 2001 072 480

## Description

La présente invention concerne de nouvelles mousses rigides minérales et poreuses et leurs applications en tant que matériau isolant thermique réfractaire dans la construction ou l'industrie.

La raréfaction des énergies fossiles et ressources primaires impose le développement de nouveaux matériaux isolants thermiques efficaces et acceptables sur le plan environnemental. Les matériaux actuellement utilisés dans l'isolation du bâtiment sont efficaces mais présentent des faiblesses. Certains matériaux, tels que la mousse de polyuréthane, la ouate de polyester, le polystyrène expansé ou extrudé, ou les matériaux isolants d'origine végétale ou animale, sont inflammables. Certains des matériaux isolants actuellement disponibles sur le marché peuvent nuire à la santé ou l'environnement. D'autres n'améliorent ni la résistance au feu, ni la sécurité incendie et peuvent présenter des contraintes de recyclage.

Ces dernières années, le centre d'intérêt du développement de nouveaux matériaux isolants thermiques et réfractaires s'est déplacé vers des matériaux à base de minéraux, connus pour être réfractaires. Plusieurs méthodes de production ont été proposées dans la littérature pour la production des matériaux minéraux légers, souvent sous forme de mousse rigide.

La demande WO 2007/043022 décrit un procédé de fabrication d'un matériau céramique réfractaire à porosité, selon lequel un agent moussant est ajouté dans une suspension aqueuse de poudres céramiques pour produire une mousse céramique après agitation mécanique. Après la stabilisation, cette mousse subit un premier traitement thermique à une température entre 50°C et 110°C et un second traitement thermique à une température supérieure à 1500°C.

La demande WO 2008/146320 décrit un matériau isolant thermique et acoustique. Ce matériau possède une structure cellulaire comprenant des fibres céramiques, telles que la laine de verre ou la laine minérale et est formé par une émulsion en mousse comprenant des fibres céramiques, au moins un agent de liaison à base de silicate et au moins un agent moussant-émulsifiant organique. La susdite émulsion subit d'abord un premier traitement thermique de 70°C à 120 °C pour consolider la structure de la mousse et obtenir un corps solide. Ledit corps solide subit ensuite un deuxième traitement thermique à haute température, notamment de 400°C à 800°C pour éliminer les composants organiques présents dans ledit corps solide et obtenir le matériau final.

Ces matériaux sont réfractaires et efficaces sur le plan de l'isolation thermique. Cependant, leur production est énergiquement coûteuse, à cause de la nécessité d'un traitement thermique à haute température.

La demande de brevet japonais JP2001-072480 décrit une composition de revêtement d'isolation thermique obtenue par le mélange d'une première solution aqueuse comprenant du silicate de sodium et une deuxième solution comprenant :
- un agent solidifiant ledit silicate de sodium, notamment le borate de zinc, et
- une mousse formée par des particules inorganiques fines et des particules de résines synthétiques, telles que des résines de polystyrène, de polyuréthane, ou de polychlorure de vinyle.

La composition décrite dans cette demande contient toujours des résines organiques inflammables.

Le brevet EP 1 164 179 décrit un procédé de fabrication d'un matériau isolant et ignifugeant consistant en les étapes suivantes :
a) faire mousser un phyllosilicate apte au gonflement d'au moins 1 à 10 fois le volume à l'aide d'un agent moussant dans l'eau en formant une mousse contenant de fines bulles d'air ;
b) mélanger dans un récipient séparé, de l'eau avec du dioxyde de silicium colloïdal, de l'oxyde d'aluminium et/ou un silicate alcalin, on ajoute les bâtonnets de silicate sous agitation constante, et après avoir obtenu un mélange homogène on ajoute une solution aqueuse du sulfate d'aluminium pour former une dispersion ;
c) mélanger la mousse obtenue dans l'étape a) uniformément à la dispersion obtenue à l'étape b),
d) incorporer un produit imperméabilisant et
e) sécher et calciner et/ou recuire la dispersion moussée obtenue.

Ledit procédé utilise notamment un produit imperméabilisant et nécessite une calcination à une température de 300 à 600 °C.

Il existe par conséquent un besoin pour des matériaux sains et susceptibles d'être obtenus par un procédé simple et bon marché à des températures inférieures à 100°C, possédant un excellent caractère isolant et réfractaire, et de faible coût de production, pour être utilisés dans la construction de bâtiment, l'industrie.

La présente invention a donc pour but de remédier aux inconvénients susmentionnés en proposant de nouvelles mousses rigides minérales et poreuses.

L'invention a pour objet un procédé de préparation d'une mousse rigide, minérale et poreuse, comprenant ou constitué par les étapes suivantes :
(i) la préparation d'une suspension chargée de particules ou fibres minérales par le mélange entre :
   - une solution aqueuse d'au moins un silicate de métal alcalin, un aluminate de métal alcalin, ou leurs mélanges, avec
   - des particules et/ou fibres minérales qui sont au moins partiellement insolubles dans la susdite solution,
   - éventuellement, au moins une molécule fonctionnelle;
(ii) la préparation d'une mousse par la dispersion d'un gaz dans une deuxième solution aqueuse comprenant :
   - au moins un agent moussant protéique naturel ou synthétique d'origine animale ou végétale choisi parmi le groupe comprenant le blanc d'oeuf, les lécithines, et les protéines naturelles ou synthétiques éventuellement hydrolysées, telles que les protéines sériques, notamment l'albumine, les caséines, les protéines halogénées, les émulseurs protéino-halogénées, ou un mélange des susdits agents moussants, et
   - éventuellement au moins un tensioactif différent de l'agent moussant utilisé dans ladite solution;
(iii) la préparation d'un mélange mousseux par le mélange de la susdite suspension obtenue à l'étape (i) et de la susdite mousse obtenue à l'étape (ii) ;
(iv) la stabilisation du mélange mousseux obtenu à la fin de l'étape (iii) pour obtenir ladite mousse rigide, ledit mélange mousseux étant stabilisé par chauffage à une température entre 30°C et 200°C, par injection de CO₂, par ajout de poudre de matière sèche ou de poudre de métaux, ou par ajout d'acides faibles, d'esters organiques, des carbonates d'alkylènes, ou d'esters acétiques.

L'invention a également pour objet les mousses rigides, minérales et poreuses, susceptibles d'être obtenues selon le procédé de préparation décrite dans la présente description.

Dans le cadre de la présente invention, la mousse obtenue dans l'étape (ii) est désignée comme une « émulsion gazeuse ».

L'invention repose sur le fait que les matériaux de l'invention possèdent une structure macroporeuse, grâce à la stabilisation pérenne d'une émulsion gazeuse par apport d'une suspension de particules minérales dans une solution de silicate et/ou d'aluminate de métal alcalin.

En effet, l'Inventeur a constaté de manière surprenante que l'apport de cette suspension ne déstabilise pas la structure d'une émulsion gazeuse préalablement formée, ce qui permet une dispersion homogène du gaz initialement contenu dans l'émulsion gazeuse dans ladite suspension, en préservant l'aptitude de gonflement du mélange mousseux.

En outre, la production des matériaux de l'invention ne nécessite pas de traitement thermique à haute température et valorise les poudres dans leur état initial et est par conséquent très économique sur le plan de la consommation d'énergie.

Les nouvelles mousses rigides poreuses de la présente invention possèdent d'excellentes propriétés d'isolation thermique et/ou phonique, une bonne capacité thermique, et sont susceptibles de résister à de hautes températures (supérieures à 1000°C voire 1500°C selon les matières premières choisies). Ces propriétés physico-chimiques sont liées à la capacité de produire une structure composite poreuse.

La porosité du matériau de l'invention est attribuée à la fois aux bulles de gaz constituant initialement l'émulsion gazeuse, à l'élimination de l'eau initialement présente, aux entraînements d'air et piégé sur les particules micrométriques de la suspension, qui produisent des micropores et nanopores, et à la formation de bulles de taille de millimétrique à centimétrique résultant de la coagulation de certains constituants lors du mélange mécanique entre l'émulsion gazeuse et la suspension. La coagulation est susceptible d'intervenir au contact de la phase liquide de l'émulsion gazeuse avec la suspension chargée en particules minérales, entraînant une modification du pH au sein de ladite l'émulsion gazeuse et de ladite suspension.

Par conséquent, par contrôle de l'apport du gaz venant de l'émulsion gazeuse et/ou par la réaction de coagulation, la taille de certain des pores peut être contrôlée et variée d'une mousse à l'autre.

Les minéraux de départ des matériaux de l'invention sont les minéraux au moins partiellement insolubles dans une solution de silicate ou aluminate de métal alcalin.

Ces minéraux sont utilisés dans le cadre de la présente invention sous forme de particules ou de fibres.

Au sens de la présente invention, on entend par « particule » des poudres ayant un diamètre de grain médian de 1 à 100 µm, idéalement compris entre 5 et 50 µm.

On entend par « fibre » toute fibre d'une longueur supérieure à 5 µm, inférieur à 100 µm, et d'un ratio longueur/diamètre supérieur à 3.

A titre d'exemple, les particules ou fibres minérales utilisables sont les particules ou fibres d'un ou plusieurs minéraux choisis dans le groupe comprenant les verres, briques, grès, feldspaths, céramiques, laitiers, argiles, argiles déhydroxylées, carbonates, phosphates, oxydes métalliques, borures de métaux ou de silicium, carbures de métaux ou de silicium, cendres et mélanges silico-alumineux, nitrures, microballons de silice ou cénosphères, les silicates tels que le silicate de calcium, le carbone élémentaire tel que le graphite ou le charbon, le kaolin, le métakaolin, le talc, le zircon, le chromite, le phosphure de bore ou de soufre, le bore élémentaire, le dioxyde de titane, l'apatite, l'hydroxyapatite, l'alumine, l'anthracite, l'olivine, la magnésite, la silice, la pouzzolane, la silice pyrogénée, ou la fumée de silice.

Il est à noter que ces minéraux peuvent jouer un rôle fonctionnel en plus de leur rôle structurel au sein d'une mousse rigide de l'invention et conférer éventuellement des fonctions supplémentaires aux mousses rigides de l'invention. Par exemple, certains minéraux sont électriquement conducteurs et peuvent absorber les ondes électromagnétiques.

La mousse rigide de l'invention peut être renforcée ou armée par l'ajout de fibres de longueur supérieure au millimètre et en proportion pondérale inférieure à 0,5% par rapport à la masse finale de ladite mousse rigide. Lesdites fibres peuvent être des fibres de polyester, de carbone ou de polypropylène. Ces fibres peuvent être dispersées dans la suspension chargée de particules et/ou fibres minérales ou dans le mélange mousseux avant solidification.

A titre d'exemple de silicate de métal alcalin, on peut notamment citer le silicate de sodium, de magnésium, ou de potassium.

A titre d'exemple d'aluminate de métal alcalin, on peut notamment citer l'aluminate de sodium, de magnésium, ou de potassium.

Dans un mode préféré de réalisation, la suspension de l'étape (i) du susdit procédé est obtenue sur la base d'une solution de silicate de sodium.

De manière générale, le silicate de sodium utilisé dans l'invention possède un ratio molaire SiO₂/Na₂O compris de 1,9 à 3,9. Le choix de ce ratio influence le pH de la suspension obtenue dans la susdite étape (i): un ratio inférieur à 2,8 conduit à une suspension fortement alcaline ; un ratio supérieur à 2,9 permet, en revanche, de produire une suspension plus proche de la neutralité.

En effet, un pH élevé conduit à une coagulation de mélanges mousseux comprenant des agents moussants protéiniques au moment du mélange et donc à la constitution de macroporosités.

L'homme du métier saura adapter la concentration de la solution de silicate et/ou aluminate de métal alcalin en fonction de la nature et de l'état de surface des particules et/ou fibres mises en oeuvre et selon les caractéristiques mécaniques recherchées pour le matériau fini. Avantageusement, le pourcentage de la matière sèche de cette solution est de 28% à 51%.

Dans un mode de réalisation particulier, le silicate de métal alcalin peut être produit *in situ* selon les méthodes conventionnelles connues de l'homme du métier.

Avantageusement, lors de la préparation de la suspension de l'étape (i), le rapport massique entre le poids de particules et/ou fibres minérales contenues dans la suspension et celui de la solution de silicate et/ou aluminate de métal alcalin est de 1 : 0,5 à 1 : 20. L'homme du métier saura adapter ce rapport massique selon la densité, l'état de surface de particules et/ou fibres minérales utilisées ou leur affinité pour le silicate et/ou l'aluminate de métal alcalin.

Au sens de l'invention, on entend par « molécule fonctionnelle », un composant qui n'est pas présent obligatoirement dans une mousse rigide de l'invention et permet de conférer à une mousse contenant ladite molécule fonctionnelle des fonctions ou applications supplémentaires, en plus de celles liées à sa propriété d'isolation thermique, réfractaire et poreuse et partagées par toutes les mousses rigides de l'invention.

Dans un mode de réalisation particulier, ladite molécule fonctionnelle est choisie parmi un catalyseur, un colorant, un composé possédant les propriétés des sorption des gaz ou d'absorption des ondes électromagnétiques.

Un mode de réalisation particulier de l'invention porte sur une mousse rigide électriquement conductrice, qui est obtenue à partir d'une suspension comprenant, en tant que molécule fonctionnelle, des particules et/ou fibres minérales soit naturellement conductrices, soit rendues conductrices après un traitement spécifique, ou des poudres métalliques.

A titre d'exemple, un dépôt métallique peut rendre les particules et/ou fibres minérales conductrices.

Certaines molécules fonctionnelles peuvent également être incorporées dans le mélange mousseux obtenu dans l'étape (iii) susmentionnée.

Dans un mode de réalisation avantageux, la suspension susmentionnée dans l'étape (i) est obtenue par le mélange entre :
- une solution aqueuse d'au moins un silicate de métal alcalin, un aluminate de métal alcalin, ou leurs mélanges, avec
- des particules et/ou fibres minérales qui sont au moins partiellement insolubles dans la susdite solution, et
- au moins une molécule fonctionnelle.

Dans un mode de réalisation avantageux, la suspension susmentionnée dans l'étape (i) est obtenue par le mélange entre :
- une solution aqueuse d'au moins un silicate de métal alcalin, un aluminate de métal alcalin, ou leurs mélanges, avec
- des particules et/ou fibres minérales qui sont au moins partiellement insolubles dans la susdite solution.

Dans un autre mode de réalisation particulier, la suspension susmentionnée dans l'étape (i) pour la préparation d'une mousse minérale de l'invention comprend en outre des liants organiques, tel que le polyvinyle alcool ou les résines acryliques, à faible dose, ce qui permet d'éviter un éventuel comportement initial poudreux des matériaux de l'invention lié aux cinétiques réactionnelles éventuellement lentes. L'homme du métier saura trouver la dose appropriée à ajouter à ladite suspension selon l'enseignement de l'art antérieur.

Conformément à l'invention, la mousse susmentionnée dans l'étape (ii) de susdit procédé est préparée à partir d'un ou plusieurs agents moussants naturels ou synthétiques d'origine animale ou végétale. Ces agents moussants sont choisis en particulier dans le groupe comprenant le blanc d'oeuf, les lécithines, et les protéines naturelles ou synthétiques éventuellement hydrolysées, telles que les protéines sériques, notamment l'albumine, les caséines, les protéines halogénées, les émulseurs protéino-halogénées, ou les mélanges de ces agents entre eux.

Dans un mode de réalisation particulièrement avantageux, l'agent moussant utilisé pour préparer la mousse de l'étape (ii) est choisi dans le groupe constitué par le blanc d'oeuf, les lécithines, les protéines sériques, notamment l'albumine, les caséines, ou les mélanges de ces agents entre eux.

A titre d'exemple, le gaz utilisé dans la susdite étape (ii) pour la préparation de mousse peut être l'air, l'argon, l'azote, ou tout autre gaz inerte ou leurs mélanges d'une part, le dioxyde de carbone d'autre part, ou leurs mélanges. Le dioxyde de carbone amorce, s'il est présent, le processus de stabilisation. L'homme du métier saura choisir le gaz selon son affinité pour l'eau, les silicates, les aluminates ou selon ses propres propriétés physiques.

D'une manière appropriée, la deuxième solution aqueuse utilisée dans la susdite étape (ii) est une solution aqueuse d'un agent moussant naturel ou synthétique d'origine animale ou végétale, notamment d'un agent moussant choisi dans le groupe constitué par le blanc d'oeuf, les lécithines, les protéines sériques, notamment l'albumine, les caséines, ou les mélanges de ces agents entre eux.

Plus particulièrement, la deuxième solution aqueuse utilisée dans la susdite étape (ii) est une solution aqueuse de blanc d'oeuf.

D'une autre manière appropriée, la deuxième solution aqueuse utilisée dans la susdite étape (ii) comprend en outre au moins un tensioactif qui est différent de l'agent moussant utilisée dans ladite solution, ce qui permet de stabiliser, fluidifier ou améliorer la texture de la mousse en adaptant les caractéristiques de porosité aux besoins. Ledit tensioactif peut être choisi parmi un tensioactif conventionnel. La quantité de tensioactif dans ladite solution aqueuse est faible devant celle d'agent moussant.

Dans un mode de réalisation particulier, l'invention porte sur un procédé de préparation d'une mousse minérale, comprenant les étapes suivantes :
(i) la préparation d'une suspension chargée de particules et/ou fibres minérales, par le mélange entre :
   - une solution aqueuse d'au moins un silicate de métal alcalin, un aluminate de métal alcalin, ou leurs mélanges, avec
   - des particules ou fibres minérales qui sont au moins partiellement insolubles dans la susdite solution,
(ii) la préparation d'une mousse par la dispersion d'un gaz dans une deuxième solution aqueuse consistant en une solution aqueuse d'un agent moussant choisi dans le groupe constitué par le blanc d'oeuf, les lécithines, les protéines sériques, notamment l'albumine, les caséines, ou les mélanges de ces agents entre eux ;
(iii) la préparation d'un mélange mousseux par le mélange de la susdite suspension obtenue à l'étape (i) et de la susdite mousse obtenue à l'étape (ii) ;
(iv) la stabilisation du mélange mousseux obtenu à la fin de l'étape (iii) pour obtenir ladite mousse rigide.

Le mélange mousseux susmentionné dans l'étape (iii) de susdit procédé peut être obtenu soit par l'apport de la suspension obtenue selon l'étape (i) dans la mousse obtenue selon l'étape (ii), soit par la dispersion de la mousse obtenue selon l'étape (ii) dans la suspension obtenue selon l'étape (i).

Par "stabilisation du mélange mousseux", on entend au sens de la présente invention, une évolution d'une structure de mousse plastique vers une structure de mousse rigide.

Le mélange mousseux obtenu selon l'étape (iii) susmentionnée peut être stabilisé par plusieurs méthodes connues dans l'art antérieur.

A titre d'exemple, ce mélange mousseux peut être stabilisé par voie thermique, notamment par chauffage à une température entre 30°C et 200°C, ce qui conduit à la coagulation des constituants dudit mélange mousseux, tels que des agents mousseux protéiniques ou des liants organiques, dans ledit mélange mousseux, et à la précipitation de silice sous forme solide par évaporation de l'eau contenu dans ledit mélange mousseux.

Le chauffage du mélange mousseux peut être mis en oeuvre par toutes méthodes conventionnelles, notamment par un four à micro-ondes.

Ce mode de stabilisation peut être intégré aisément dans un procédé industriel.

La production d'une émulsion gazeuse peut être effectuée en quelques dizaines de secondes.

La suspension de particules peut également être obtenue en quelques dizaines de secondes. Elle peut aussi être préalablement préparée et se conserve aisément à condition d'être protégée du CO₂ afin d'empêcher toute carbonatation.

La stabilisation, par chauffage à l'aide d'un four à micro-ondes, pour obtenir une mousse rigide « prête à l'emploi » et sèche à partir d'une émulsion gazeuse et d'une suspension chargée en particules minérales ne peut prendre alors que quelques dizaines de secondes, ce qui permet une production industrielle sur site ou même l'obtention d'une mousse rigide ayant une structure tridimensionnel souhaitée à l'aide des technologies connues, par exemple « l'impression 3D ».

La stabilisation peut également être mise en oeuvre par coagulation spontanée, suite à la modification du pH liée à la solubilisation partielle de CO₂, ce dernier pouvant être le CO₂ atmosphérique piégé initialement dans l'émulsion gazeuse obtenue selon l'étape (ii) ou au fur et à mesure pendant la stabilisation, ou du CO₂ injecté dans le mélange mousseux avant ou pendant la stabilisation.

La coagulation peut également être déclenchée par apport de poudre de matière sèche ou de poudre de métaux alcalins finement divisée au mélange mousseux non stabilisé. Cette coagulation est le résultat de l'augmentation conjuguée du ratio SiO₂/Na₂O et de la matière solide par ajout de silicium, ferro-silicium, magnésium, aluminium au mélange mousseux ou par ajout direct du silicate de sodium, ce qui entraîne une réaction physico-chimique exothermique qui déshydrate le mélange mousseux.

La stabilisation peut également être mise en oeuvre par apport d'acides faibles ou d'esters organiques, tels que des esters de polyalcools, les mono-, di-, ou tri-esters de glycérol, notamment les mono-, di-, ou triacétate de glycérol, ou des carbonates d'alkylènes, tels que le carbonate de propylène ou le carbonate d'éthylène, ou des esters acétiques, tels que l'acétate d'éthyle. Ces composants peuvent être apportés au mélange mousseux non stabilisé ou à l'émulsion gazeuse initiale.

La solidification de la mousse par apport du CO₂, d'acides faibles ou d'esters peut nécessiter la mise en oeuvre de quantité plus importante de silicates de métaux alcalins. L'homme de l'art saura ajuster la quantité des silicates de métaux alcalins utilisés selon son mode de stabilisation choisi.

L'avantage essentiel des mousses rigides de l'invention réside dans leur excellente capacité d'isolation thermique associée à leur porosité et aux caractéristiques de résistance à des températures très élevées.

Les mousses rigides de l'invention peuvent être utilisées comme matériau isolant thermique et/ou phonique, dans la construction ou l'isolation extérieure et/ou intérieure de bâtiment, dans l'industrie, les applications géotechniques, le transport, les mines, les ouvrages d'art, l'exploration ou production pétrolière et gazière.

Comme la stabilisation du mélange mousseux par diffusion du CO₂ éventuellement présent dans la mousse ou diffusion du CO₂ atmosphérique, les mousses rigides de l'invention peuvent être utilisées comme mousse d'isolation thermique et/ou phonique à durcissement différé mais spontané.

Cette propriété permet d'éviter une étape supplémentaire de stabilisation par d'autres moyens, lorsque ce durcissement spontané est compatible avec l'application envisagée, tel le cas de certaines applications au bâtiment.

Dans un mode de réalisation particulier, l'invention porte sur l'utilisation des mousses rigides poreuses décrites auparavant comme support d'isolation par le vide par application d'une enveloppe imperméable sur les panneaux de mousses rigides de l'invention. Ces derniers assurent alors l'obtention d'un volume vide d'air.

Une mousse rigide poreuse de l'invention peut également être utilisée comme un élément de stockage de chaleur dans la fabrication d'un échangeur ou puits de chaleur, en raison de sa très bonne capacité thermique dans une large gamme de température et de son caractère poreux.

Un autre aspect avantageux des mousses rigides de l'invention est qu'elles sont résistantes à très haute température.

Ces mousses rigides peuvent être utilisées comme matériau résistant au feu ou matériau de protection contre le feu, la chaleur, ou les rayonnements, notamment le rayonnement infrarouge, ou comme matériau pour la fabrication des éléments industriels qui exigent une résistance à haute température.

Selon un mode de réalisation de l'invention, lesdites mousses rigides peuvent être utilisées sous forme de composite.

Particulièrement, les mousses rigides de l'invention peuvent être utilisées comme matériau pour la fabrication de moules, notamment de moules réfractaires à haute température, plus particulièrement, de moules de fonderie ou d'électrolyse.

Selon un mode de réalisation particulier, les mousses rigides de l'invention peuvent être utilisées comme support pour la pyrolyse.

Un autre mode de réalisation particulier de l'invention concerne l'utilisation d'un mélange mousseux qui n'est pas encore stabilisé et est encore sous forme plastique, pour la lutte contre le feu.

Le mélange mousseux, au contact du feu ou par diffusion du CO₂ atmosphérique, est solidifié et transformé en mousse rigide réfractaire, ininflammable et limite alors la propagation.

Les mousses rigides de la présente invention peuvent également être utilisées comme matériau de construction d'âme ininflammable de matériaux composites.

En outre, la faible densité des mousses rigides de l'invention liée à leur caractère poreux permet de les utiliser comme mousse de conditionnement ou de protection contre les chocs, ou comme matériau d'inertage de cavité et de conception de barrières antidéflagrantes.

Un autre mode de réalisation particulier est l'utilisation des mousses rigides de l'invention comme réserve de flottabilité.

Selon un autre mode de réalisation particulier, les mousses rigides de l'invention peuvent être utilisées comme matériau de construction, support de stratification, âme ou liant pour la constitution d'éléments composites ou stratifiés.

La structure cellulaire et les propriétés physico-chimiques de certains constituants des mousses rigides de l'invention leur confèrent également des applications spécifiques.

Ainsi dans un mode de réalisation particulier, les mousses rigides de l'invention sont utilisées comme matériau de conditionnement d'air ou de traitement des liquides ou des gaz par filtration ou sorption.

Selon un autre mode de réalisation particulier, l'invention concerne l'utilisation d'une mousse rigide de l'invention comme support de catalyse, soit grâce aux minéraux contenus dans ladite mousse et fonctionnés comme un catalyseur ; soit par ajout d'un catalyseur comme molécule fonctionnelle dans la suspension obtenue selon la susdite étape (i).

Un autre aspect de l'utilisation d'une mousse rigide de l'invention concerne l'utilisation d'une mousse à la surface de laquelle est déposé un combustible, comme matériau rayonnant l'infrarouge.

L'invention porte également sur l'utilisation d'une mousse rigide électroniquement conductrice décrite auparavant comme matériau pour blindage électromagnétique.

L'invention est illustrée davantage par les exemples ci-après.

### 1. Préparation d'une nouvelle mousse rigide poreuse

### 1.1. Préparation d'une suspension silicatée chargée de particules minérales

160 g d'une solution de silicate de sodium est préparée. Le ratio molaire SiO₂/Na₂O de ladite solution est de 3,3 à 3,5. Leur rapport pondéral est de 3,2 à 3,4. La densité de la solution de silicate de sodium obtenue est de 1,33 à 1,45. Le pourcentage de la matière sèche de la solution de silicate de sodium est de 50%.

160 g de particules minérales est ajouté dans 160 g de la susdite solution de silicate de sodium.

### 1.2 Préparation d'une émulsion gazeuse

Une quantité appropriée de blanc d'oeuf est agité mécaniquement pour obtenir une mousse plastique.

### 1.3 Préparation d'un mélange mousseux

320 g de la suspension silicatée obtenue dans 1.1 est ajouté à 1L d'émulsion gazeuse obtenue dans 1.2.

### 1.4 Obtention d'une mousse rigide

Après la stabilisation du mélange mousseux, la mousse rigide obtenue présente un volume sensiblement équivalent à celui de l'émulsion gazeuse initiale et possède une densité finale vraie de 0,25. La densité d'une mousse rigide peut être variée en fonction du taux de macroporosité de cette mousse. Elle peut être notablement plus faible.

Plusieurs mousses rigides contenant différent minéraux de départ ont été préparées et testées.

Les formulations de ces mousses sont récapitulées dans le tableau I ci-après.

**Tableau I**

| **Formulation** | **1** | **2** | **3** | **4** | **5** | **6** | **7** | **8** | **9** |
|---|---|---|---|---|---|---|---|---|---|
| Emulsion gazeuse (litre) | 1 | 1 | 1 | 1 | 1 | 1 | 1 | 1 | 1 |
| Solution de silicate à 50% MS (g) | 200 | 200 | 200 | 140 | 200 | 200 | 200 | 200 | 200 |

| **Minéral de départ** | | | | | | | | | |
|---|---|---|---|---|---|---|---|---|---|
| Silice (g) | 100 | 100 | 10 | | 10 | 130 | | | 40 |
| Alumine (g) | 60 | 20 | | | 10 | 15 | | 100 | 20 |
| Metakaolin (g) | | | | | | | | | 30 |
| Poudre de verre (g) | | 10 | | | 50 | | 100 | | |
| Microballons/Cénosphères (g) | | | 15 | 15 | | | | | |
| Silice pyrogénée (g) | | | | | | | | 10 | |
| Graphite (g) | | 20 | 20 | | | 5 | | | |
| Poudre de laitier (g) | | | | | | | | | 30 |
| **Somme de solides (g)** | **160** | **150** | **55** | **15** | **70** | **150** | **100** | **110** | **120** |
| **Somme totale MS (g)** | **260** | **250** | **155** | **85** | **170** | **250** | **200** | **210** | **220** |
| Densité finale après déshydratation (kg/m³) | 260 | 250 | 155 | 85 | 170 | 250 | 200 | 210 | 220 |

### 2. Propriété réfractaire des mousses rigides de l'invention

Des tests de résistance à la flamme ont été réalisés sur ces susdites mousses rigides sous forme d'éprouvette épaisse de 6x15x15 cm, dont l'une des faces a été exposée à la flamme de plus de 1500°C, produite par un électro-brûleur, durant plusieurs dizaines de minutes.

Ces tests montrent que l'intégrité de l'éprouvette a été maintenue et qu'un gradient de température de 200°C/cm est aisément obtenu.

La capacité de résistance aux chocs thermiques et la stabilité dimensionnelle de ces mousses sont également analysées.

La capacité de résistance aux chocs thermique est testée par la coulée d'acier fortement allié à 1400°C sur une mousse rigide de l'invention.

La stabilité dimensionnelle d'une mousse est testée par essai d'émaillage à 850°C.

Ces expériences montrent que les mousses rigides de l'invention sont très résistantes aux chocs thermiques et possèdent une très bonne stabilité dimensionnelle.

## Revendications

1. Procédé de préparation d'une mousse rigide, minérale et poreuse, comprenant les étapes suivantes :
(i) la préparation d'une suspension chargée de particules et/ou fibres minérales, par le mélange entre :
- une solution aqueuse d'au moins un silicate de métal alcalin, un aluminate de métal alcalin, ou leurs mélanges, avec
- des particules ou fibres minérales qui sont au moins partiellement insolubles dans la susdite solution,
- éventuellement, au moins une molécule fonctionnelle;
(ii) la préparation d'une mousse par la dispersion d'un gaz dans une deuxième solution aqueuse comprenant :
- au moins un agent moussant naturel ou synthétique d'origine animale ou végétale choisi parmi le groupe comprenant le blanc d'oeuf, les lécithines, et les protéines naturelles ou synthétiques éventuellement hydrolysées, telles que les protéines sériques, notamment l'albumine, les caséines, les protéines halogénées, ou un mélange des susdits agents moussants, et
- éventuellement au moins un tensioactif qui est différent de l'agent moussant utilisé dans ladite solution;
(iii) la préparation d'un mélange mousseux par le mélange de la susdite suspension obtenue à l'étape (i) et de la susdite mousse obtenue à l'étape (ii) ;
(iv) la stabilisation du mélange mousseux obtenu à la fin de l'étape (iii) pour obtenir ladite mousse rigide, ledit mélange mousseux étant stabilisé par chauffage à une température entre 30°C et 200°C, par injection de COz, par ajout de poudre de matière sèche ou de poudre de métaux, ou par ajout d'acides faibles, d'esters organiques, des carbonates d'alkylènes, ou d'esters acétiques.

2. Procédé de préparation d'une mousse minérale selon la revendication 1, **caractérisée en ce que** les particules ou fibres minérales sont les particules ou fibres d'un ou plusieurs minéraux choisis dans le groupe comprenant les verres, briques, grès, feldspaths, céramiques, argiles, argiles déhydroxylées, carbonates, phosphates, oxydes métalliques, borures de métaux ou de silicium, carbures de métaux ou de silicium, laitiers, cendres et mélanges silico-alumineux, nitrures, microballons de silice ou cénosphères, les silicates tels que le silicate de calcium, le carbone élémentaire tel que le graphite ou le charbon, le kaolin, le métakaolin, le talc, le zircon, le chromite, le phosphure de bore ou de soufre, le bore élémentaire, le dioxyde de titane, l'apatite, l'hydroxyapatite, la pouzzolane, l'alumine, l'anthracite, l'olivine, la magnésite, la silice, la silice pyrogénée, ou la fumée de silice.

3. Procédé de préparation d'une mousse minérale selon l'une quelconque des revendications 1 ou 2, **caractérisée en ce que** ladite molécule fonctionnelle est choisie parmi un catalyseur, un colorant, un composé possédant des propriétés de sorption des gaz ou d'absorption des ondes électromagnétiques.

4. Procédé de préparation d'une mousse minérale selon l'une quelconque des revendications 1 à 3, comprenant les étapes suivantes :
(i) la préparation d'une suspension chargée de particules et/ou fibres minérales, par le mélange entre :
- une solution aqueuse d'au moins un silicate de métal alcalin, un aluminate de métal alcalin, ou leurs mélanges, avec
- des particules ou fibres minérales qui sont au moins partiellement insolubles dans la susdite solution,
(ii) la préparation d'une mousse par la dispersion d'un gaz dans une deuxième solution aqueuse consistant en une solution aqueuse d'un agent moussant choisi dans le groupe constitué par le blanc d'oeuf, les lécithines, les protéines sériques, notamment l'albumine, les caséines, ou les mélanges de ces agents entre eux ;
(iii) la préparation d'un mélange mousseux par le mélange de la susdite suspension obtenue à l'étape (i) et de la susdite mousse obtenue à l'étape (ii) ;
(iv) la stabilisation du mélange mousseux obtenu à la fin de l'étape (iii) pour obtenir ladite mousse rigide.

5. Mousse rigide, minérale et poreuse, **caractérisée en ce qu'**elle est obtenue selon un procédé de préparation tel que défini selon l'une quelconque des revendications 1 à 4, et **en ce qu'**elle possède une structure macroporeuse.

6. Utilisation d'une mousse selon la revendication 5 ou obtenue selon l'une quelconque des revendications 1 à 4 comme
- matériau isolant thermique et/ou phonique, dans le bâtiment, l'industrie, les applications géotechniques, le transport, les mines, les ouvrages d'art, l'exploration, la production pétrolière et gazière ; ou
- matériau résistant au feu ou matériau de protection contre le feu, la chaleur ou les rayonnements ; ou
- matériau de conditionnement d'air, de traitement des liquides ou des gaz par filtration ou sorption.

7. Utilisation d'une mousse selon la revendication 5 ou obtenue selon l'une quelconque des revendications 1 à 4 comme support de catalyse, ladite mousse étant obtenue à partir d'une susdite suspension comprenant éventuellement au moins un catalyseur comme molécule fonctionnelle.

8. Utilisation d'une mousse selon la revendication 5 ou obtenue selon l'une quelconque des revendications 1 à 4 comme matériau pour blindage électromagnétique, ladite mousse étant obtenue à partir d'une susdite suspension comprenant des particules et/ou fibres minérales électriquement conductrices ou des poudres métalliques ou minérales rendues conductrices.

9. Utilisation d'une mousse selon la revendication 5 ou obtenue selon l'une quelconque des revendications 1 à 4 comme
- matériau de constitution des moules, notamment des moules et réfractaires à haute température ; ou
- mousse de conditionnement ou de protection contre les chocs ;
- matériau de construction, support de stratification, âme ou liant pour la constitution d'éléments composites ou stratifiés.

10. Utilisation d'une mousse selon la revendication 5 ou obtenue selon l'une quelconque des revendications 1 à 4 comme élément de stockage de chaleur dans la fabrication d'échangeur ou puits de chaleur.

11. Utilisation d'une mousse selon la revendication 5 ou obtenue selon l'une quelconque des revendications 1 à 4 comme réserve de flottabilité.

12. Utilisation d'une mousse selon la revendication 5 ou obtenue selon l'une quelconque des revendications 1 à 4 comme matériau antidéflagrant et d'inertage de cavité.

13. Utilisation d'un mélange mousseux tel que défini selon la revendication 1 comme mousse de lutte contre le feu.

## Patentansprüche

1. Verfahren zur Herstellung eines rigiden, mineralischen und porösen Schaumstoffs, umfassend die folgenden Schritte:
(i) Herstellung einer mit mineralischen Partikeln und/oder Fasern beladenen Suspension durch Mischung von:
- einer wässrigen Lösung von mindestens einem Alkalimetallsilikat, einem Alkalimetallaluminat, oder deren Mischungen, mit
- mineralischen Partikeln oder Fasern, die in der genannten Lösung zumindest teilweise unlöslich sind,
- optional mindestens einem funktionellen Molekül;
(ii) Herstellung eines Schaums durch Dispersion eines Gases in einer zweiten wässrigen Lösung umfassend:
- mindestens einen natürlichen oder synthetischen Schaumbildner tierischen oder pflanzlichen Ursprungs, ausgewählt aus der Gruppe umfassend Eiweiß, Lecithine und natürliche oder synthetische, optional hydrolysierte Proteine, wie Serumproteine, insbesondere Albumin, Kaseine, halogenierte Proteine, oder eine Mischung der vorgenannten Schaumbildner, und
- optional mindestens ein oberflächenaktives Mittel, das sich von dem in der genannten Lösung verwendeten Schaumbildner unterscheidet;
(iii) Herstellung einer schaumigen Mischung durch Mischung der vorgenannten in Schritt (i) erhaltenen Suspension und des vorgenannten in Schritt (ii) erhaltenen Schaums;
(iv) Stabilisierung der am Ende des Schritts (iii) erhaltenen schaumigen Mischung, um den genannten rigiden Schaumstoff zu erhalten, wobei die genannte schaumige Mischung durch Erhitzen auf eine Temperatur zwischen 30°C und 200°C, durch Einspritzen von COz, durch Zugabe von Trockenstoffpulver oder Metallpulver, oder durch Zugabe von schwachen Säuren, organischen Estern, Alkylencarbonaten oder Essigsäureestern stabilisiert wird.

2. Verfahren zur Herstellung eines mineralischen Schaumstoffs nach Anspruch 1, **dadurch gekennzeichnet, dass** die mineralischen Partikel oder Fasern Partikel oder Fasern aus einem oder mehreren Mineralien sind, die ausgewählt sind aus der Gruppe umfassend Gläser, Ziegel, Sandstein, Feldspat, Keramik, Ton, dehydroxylierter Ton, Karbonate, Phosphate, Metalloxide, Boride von Metallen oder Silizium, Karbide von Metallen oder Silizium, Schlacken, Aschen und Silizium-Aluminium-Mischungen, Nitride, Siliziumdioxid-Mikroballons oder Zenosphären, Silikate wie Kalziumsilikat, elementarer Kohlenstoff wie Graphit oder Kohle, Kaolin, Metakaolin, Talk, Zirkon, Chromit, Bor- oder Schwefelphosphid, elementares Bor, Titandioxid, Apatit, Hydroxylapatit, Puzzolan, Aluminiumoxid, Anthrazit, Olivin, Magnesit, Siliziumdioxid, pyrogene Kieselsäure oder Siliziumdioxidrauch.

3. Verfahren zur Herstellung eines mineralischen Schaumstoffs nach einem der Ansprüche 1 oder 2, **dadurch gekennzeichnet, dass** das genannte funktionelle Molekül aus einem Katalysator, einem Farbstoff, einer Verbindung mit Eigenschaften zur Sorption von Gasen oder zur Absorption von elektromagnetischen Wellen ausgewählt ist.

4. Verfahren zur Herstellung eines mineralischen Schaumstoffs nach einem der Ansprüche 1 bis 3, umfassend die folgenden Schritte:
(i) Herstellung einer mit mineralischen Partikeln und/oder Fasern beladenen Suspension durch Mischung von:
- einer wässrigen Lösung von mindestens einem Alkalimetallsilikat, einem Alkalimetallaluminat, oder deren Mischungen, mit
- mineralischen Partikeln oder Fasern, die in der genannten Lösung zumindest teilweise unlöslich sind,
(ii) Herstellung eines Schaums durch Dispersion eines Gases in einer zweiten wässrigen Lösung, die aus einer wässrigen Lösung eines Schaumbildners besteht, der aus der Gruppe ausgewählt ist, die aus Eiweiß, Lecithinen, Serumproteinen, insbesondere Albumin, Kaseinen, oder Mischungen dieser Mittel untereinander besteht;
(iii) Herstellung einer schaumigen Mischung durch Mischung der vorgenannten in Schritt (i) erhaltenen Suspension und des vorgenannten in Schritt (ii) erhaltenen Schaums;
(iv) Stabilisierung der am Ende des Schritts (iii) erhaltenen schaumigen Mischung, um den genannten rigiden Schaumstoff zu erhalten.

5. Rigider, mineralischer und poröser Schaumstoff, **dadurch gekennzeichnet, dass** er durch ein Herstellungsverfahren wie nach einem der Ansprüche 1 bis 4 erhältlich ist und dass er eine makroporöse Struktur besitzt.

6. Verwendung eines Schaumstoffs nach Anspruch 5 oder erhalten nach einem der Ansprüche 1 bis 4 als
- Wärme- und/oder Schallisoliermaterial, im Bauwesen, in der Industrie, bei geotechnischen Anwendungen, im Transportwesen, im Bergbau, im Ingenieurbauwesen, bei der Öl- und Gasexploration oder -förderung; oder
- feuerfestes Material oder Material zum Schutz vor Feuer, Hitze oder Strahlung; oder
- Material zur Klimatisierung von Luft, zur Behandlung von Flüssigkeiten oder Gasen durch Filtration oder Sorption.

7. Verwendung eines Schaumstoffs nach Anspruch 5 oder erhalten nach einem der Ansprüche 1 bis 4 als Katalysatorträger, wobei der Schaumstoff aus einer vorgenannten Suspension erhalten wird, die optional mindestens einen Katalysator als funktionelles Molekül enthält.

8. Verwendung eines Schaumstoffs nach Anspruch 5 oder erhalten nach einem der Ansprüche 1 bis 4 als Material zur elektromagnetischen Abschirmung, wobei der Schaumstoff aus einer vorgenannten Suspension erhalten wird, die elektrisch leitfähige mineralische Partikel und/oder Fasern oder leitfähig gemachte metallische oder mineralische Pulver enthält.

9. Verwendung eines Schaumstoffs nach Anspruch 5 oder erhalten nach einem der Ansprüche 1 bis 4 als
- Material zum Aufbau von Formen, insbesondere von Hochtemperaturformen und feuerfesten Materialien; oder
- Verpackungs- oder Stoßschutz-Schaumstoff;
- Baumaterial, Schichtträger, Kern oder Bindemittel für den Aufbau von Verbund- oder Schichtelementen.

10. Verwendung eines Schaumstoffs nach Anspruch 5 oder erhalten nach einem der Ansprüche 1 bis 4 als Wärmespeicherelement bei der Herstellung von Wärmetauschern oder Wärmesenken.

11. Verwendung eines Schaumstoffs nach Anspruch 5 oder erhalten nach einem der Ansprüche 1 bis 4 als Auftriebsreserve.

12. Verwendung eines Schaumstoffs nach Anspruch 5 oder erhalten nach einem der Ansprüche 1 bis 4 als Explosionsschutz- und Hohlrauminertisierungsmaterial.

13. Verwendung einer schaumigen Mischung, wie nach Anspruch 1 definiert, als Feuerlöschschaum.

## Claims

1. Process for preparing a rigid porous mineral foam, comprising the following steps:
(i) preparing a suspension loaded with mineral particles and/or fibres, by mixing together:
- an aqueous solution of at least one alkali metal silicate, an alkali metal aluminate, or mixtures thereof, with
- mineral particles or fibres that are at least partially insoluble in the aforementioned solution,
- optionally, at least one functional molecule;
(ii) preparing a foam by dispersing a gas in a second aqueous solution comprising:
- at least one natural or synthetic foaming agent of animal or plant origin selected from the group comprising egg white, lecithins, and the natural or synthetic proteins, optionally hydrolyzed, such as serum proteins, in particular albumin, caseins, halogenated proteins, or a mixture of the aforementioned foaming agents, and
- optionally at least one surfactant that is different from the foaming agent used in said solution;
(iii) preparing a foamy mixture by mixing the aforementioned suspension obtained in step (i) and the aforementioned foam obtained in step (ii);
(iv) stabilizing the foamy mixture obtained at the end of step (iii) to obtain said rigid foam, said foamy mixture being stabilized by heating to a temperature between 30°C and 200°C, by injecting CO₂, by adding dry matter powder or metal powder, or by adding weak acids, organic esters, alkylene carbonates or acetic esters.

2. Process for preparing a mineral foam according to claim 1, **characterized in that** the mineral particles or fibres are the particles or fibres of one or more minerals selected from the group comprising glass, bricks, sandstone, feldspars, ceramics, clays, dehydroxylated clays, carbonates, phosphates, metal oxides, metal or silicon borides, metal or silicon carbides, slag, ash and silico-aluminous mixtures, nitrides, silica microballoons or cenospheres, silicates such as calcium silicate, elemental carbon such as graphite or coal, kaolin, metakaolin, talc, zircon, chromite, boron or sulphur phosphide, elemental boron, titanium dioxide, apatite, hydroxyapatite, pozzolan, alumina, anthracite, olivine, magnesite, silica, fumed silica, or silica fume.

3. Process for preparing a mineral foam according to any one of claims 1 or 2, **characterized in that** said functional molecule is selected from a catalyst, a dye, a compound having properties of sorption of gases or absorption of electromagnetic waves.

4. Process for preparing a mineral foam according to any one of claims 1 to 3, comprising the following steps:
(i) preparing a suspension loaded with mineral particles and/or fibres, by mixing together:
- an aqueous solution of at least one alkali metal silicate, an alkali metal aluminate, or mixtures thereof, with
- mineral particles or fibres that are at least partially insoluble in the aforementioned solution,
(ii) preparing a foam by dispersing a gas in a second aqueous solution consisting of an aqueous solution of a foaming agent selected from the group constituted by egg white, lecithins, serum proteins, in particular albumin, caseins, or mixtures of these agents with one another;
(iii) preparing a foamy mixture by mixing the aforementioned suspension obtained in step (i) and the aforementioned foam obtained in step (ii);
(iv) stabilizing the foamy mixture obtained at the end of step (iii) to obtain said rigid foam.

5. Rigid porous mineral foam, **characterized in that** it is obtained according to a preparation process such as defined according to any one of claims 1 to 4, and **in that** it has a macroporous structure.

6. Use of a foam according to claim 5 or obtained according to any one of claims 1 to 4 as
- thermal and/or sound insulation material, in construction, industry, geotechnical applications, transportation, mining, engineering structures, exploration, oil and gas production; or
- fire-resistant material or fire, heat or radiation protection material; or
- material for air conditioning, treatment of liquids or gases by filtration or sorption.

7. Use of a foam according to claim 5 or obtained according to any one of claims 1 to 4 as a catalysis support, said foam being obtained from an aforementioned suspension optionally comprising at least one catalyst as functional molecule.

8. Use of a foam according to claim 5 or obtained according to any one of claims 1 to 4 as material for electromagnetic shielding, said foam being obtained from an aforementioned suspension comprising electrically conductive mineral particles and/or fibres or metal or mineral powders made conductive.

9. Use of a foam according to claim 5 or obtained according to any one of claims 1 to 4 as
- mould-forming material, in particular high-temperature moulds and refractories; or
- foam for packaging or impact protection;
- construction material, laminating support, core or binder for constituting composite or laminated elements.

10. Use of a foam according to claim 5 or obtained according to any one of claims 1 to 4 as a heat storage element in the manufacture of heat exchanger or heat sink.

11. Use of a foam according to claim 5 or obtained according to any one of claims 1 to 4 as reserve buoyancy.

12. Use of a foam according to claim 5 or obtained according to any one of claims 1 to 4 as explosion-proof material and cavity inerting.

13. Use of a foamy mixture such as defined in claim 1 as firefighting foam.
